# EUROPEAN PATENT APPLICATION

(11) **EP 3 157 166 A1**
(43) Date of publication of application: **19.04.2017**
(21) Application number: 15805809.9
(22) Date of filing: 04.02.2015
(51) Int. Cl.: H02S 40/44, B60S 5/02, C25B 9/00, C25B 11/03, F24J 2/00, H02S 20/10, H02S 20/30, H02S 20/32, H02S 30/20, H02S 40/22

(54) **STAND-ALONE ENERGY SUPPLY FACILITY EQUIPPED WITH VEHICLE HYDROGEN FUEL SUPPLY UNIT AND ELECTRIC VEHICLE CHARGER HARNESSING SUNLIGHT**

(30) Priority: 13.06.2014 JP 2014122348; 13.06.2014 JP 2014122349; 20.08.2014 JP 2014167320
(71) Applicant: Kyushu University National University Corporation, Fukuoka 812-0053 (JP); Tokushu Giken Kinzoku Co., Ltd., Asahi-shi, Chiba 289-2505 (JP)
(72) Inventor: ISHIHARA Tatsumi, Fukuoka-shi Fukuoka 812-0053 (JP); YAMAYOSHI Tetsu, Tokyo 130-0012 (JP); KOIDE Shigenori, Chuou-ku Tokyo 103-0011 (JP); KOSEKI Junichi, Asahi-shi Chiba 289-2505 (JP)
(74) Representative: DREISS Patentanwälte PartG mbB
(86) International application number: PCT/JP2015/053048
(87) International publication number: WO 2015/190123

(57) **Abstract**

A self-contained energy supply facility can supply an automotive hydrogen fuel that has been produced by utilizing solar energy, and can also supply electrical energy for an electric vehicle that has been produced by utilizing solar energy. The self-contained energy supply facility is characterized in that a concentrator panel for solar energy that includes a solar tracker is installed on a roof or the like within the energy supply facility, the concentrator panel separately concentrates infrared light whereby the solar energy can be easily converted into heat, and visible light whereby the solar energy can be easily converted into electricity, the infrared light is removed in the form of heat, introduced into a medium-temperature steam electrolyzer to produce hydrogen, the hydrogen is supplied to a hydrogen-fueled vehicle that uses hydrogen as a fuel through an automotive hydrogen fuel supply unit, and the visible light is converted into electricity using a concentrator cell of the concentrator panel, and supplied to an electric vehicle.

## Description

### TECHNICAL FIELD

The present invention relates to a self-contained energy supply facility that can supply an automotive hydrogen fuel that has been produced by utilizing solar energy, and can also supply electrical energy for an electric vehicle that has been produced by converting solar energy into electricity.

The invention relates to a self-contained energy station that can supply an automotive hydrogen fuel that has been produced by efficiently converting sunlight into energy, and can also supply electrical energy for an electric vehicle that has been produced by converting solar energy into electricity. The configuration according to the invention is characterized in that a plurality of concentrator panels including a solar tracker are provided on the roof or the like within the energy supply facility, and configured so that sunlight enters concentrator grids included in each concentrator panel for a long time to provide an energy supply facility that can effectively utilize solar energy.

The self-contained energy supply facility includes a concentrator panel device that is configured so that visible light whereby solar energy can be easily converted into electricity, and infrared light whereby solar energy can be easily converted into heat, are separately concentrated within each grid of the concentrator panel, the visible light is converted into electricity using a concentrator cell, and the electricity is stored in an electrical storage device, while the infrared light can be efficiently removed in the form of heat, and a boiler that utilizes concentrated light into which the heat is introduced to produce medium-temperature steam.

The self-contained energy supply facility according to the invention can supply electrical energy for an electric vehicle by converting visible light into electricity using the concentrator cell, and storing the electricity in the electrical storage device. The self-contained energy supply facility according to the invention can supply hydrogen to a hydrogen-fueled vehicle that uses hydrogen as a fuel by concentrating infrared light using the concentrator cell, introducing the infrared light into the boiler that utilizes concentrated light through an optical fiber to produce medium-temperature steam, supplying the medium-temperature steam to a medium-temperature steam electrolyzer, and storing the hydrogen in a hydrogen tank in a pressurized state.

### BACKGROUND ART

A lighting system that includes a solar tracker, a solar cell system that converts solar energy into electrical energy, and the like have been widely developed in order to efficiently utilize solar energy.

For example, JP-A-2013-104261 (hereinafter referred to as "Patent Literature 1") discloses a lighting device that includes a solar tracker in order to utilize sunlight. The lighting device disclosed in Patent Literature 1 is an efficient solar lighting device that is referred to as "top light" that is installed on the roof of a building, wherein a reflection mirror that includes a solar tracking system is provided within a dome that forms the top light to track sunlight so that the device directly receives sunlight.

JP-A-11-97729 (hereinafter referred to as "Patent Literature 2") discloses a solar cell system that converts solar energy into electrical energy. Patent Literature 2 aims to provide a means that ensures that a solar cell module exhibits the same power generation characteristics as those achieved when the solar cell module faces south irrespective of the direction in which the solar cell module is installed. More specifically, the solar cell module includes a plurality of concentrator cells that include a concentrator system and a solar cell, and is configured so that at least one of the plurality of concentrator cells is placed so that the direction of the optical axis of the concentrator system differs from the direction normal to the main surface of the module, or the plurality of concentrator cells can be moved to increase the time in which the module directly receives sunlight, and improve the power generation efficiency and the installation efficiency.

JP-A-2002-249031 (hereinafter referred to as "Patent Literature 3") discloses a hydrogen supply station that produces hydrogen using solar energy or the like, and supplies the resulting hydrogen to a hydrogen-fueled vehicle that uses hydrogen as a fuel. The hydrogen supply station disclosed in Patent Literature 3 includes a solar water decomposition panel that has a shape similar to that of a solar water heater, and a hydrogen separator that purifies clean water, supplies the purified water to the solar water decomposition panel, and separates hydrogen from a product gas including oxygen, hydrogen, and steam that has been produced by the solar water decomposition panel. The hydrogen that has been separated by the hydrogen separator is stored in a high-pressure hydrogen tank together with hydrogen produced by a hydrogen generator (e.g., bacterial fuel reformer and fuel cell), and supplied to a fuel cell vehicle car using a hydrogen gas filling device.

The lighting device disclosed in Patent Literature 1 utilizes sunlight directly for lighting and the like using the solar tracker, wherein sunlight is concentrated or refracted to efficiently utilize sunlight during daylight hours. However, the lighting device disclosed in Patent Literature 1 does not necessarily efficiently utilize solar energy.

Patent Literature 2 relates to solar cell power generation and the like that convert solar energy into electrical energy. Most of the techniques that utilize solar energy relate to solar cell power generation and the like that convert solar energy into electrical energy. Solar energy is produced by lights that differ in wavelength, such as UV light, visible light, and infrared light. Most of the solar cells convert only visible light included in solar energy, and light in the UV region and light in the infrared region are not sufficiently utilized for power generation and the like. Light in the UV region that has a short wavelength has high energy, and accelerates deterioration in solar cell, and light in the infrared region that has a wavelength longer than that of visible light increases the temperature of a solar cell, and causes a decrease in the output of a solar cell.

Patent Literature 3 discloses a hydrogen supply station that produces hydrogen using a solar water decomposition device or the like that produces hydrogen from purified water by utilizing solar energy, and supplies the resulting hydrogen to a hydrogen-fueled vehicle. However, the hydrogen supply station disclosed in Patent Literature 3 has a problem in that large-scale equipment (e.g., plant) is required since a bacterial fuel reformer, a solar decomposition device, and a fuel cell must be provided so that hydrogen can be supplied at low cost. Moreover, since hydrogen is produced by utilizing electricity generated by large-scale equipment (e.g., wind power generation), or electricity supplied from the outside where power transmission loss may occur, it is difficult to efficiently provide hydrogen at low cost (i.e., cost-effectiveness is low).

The invention was conceived in view of the above situation, and relates to a self-contained energy supply facility that includes an automotive hydrogen fuel supply unit and an electric vehicle charger that utilize sunlight, wherein a concentrator grid included in a concentrator panel separately concentrates infrared light whereby solar energy can be easily converted into heat, and visible light whereby solar energy can be easily converted into electricity, the infrared light is removed in the form of heat, stored in a boiler that utilizes concentrated light, and introduced into a medium-temperature steam electrolyzer to produce hydrogen, the hydrogen is stored in a hydrogen tank in a pressurized state, and can be supplied to a hydrogen-fueled vehicle that uses hydrogen as a fuel, and the visible light is converted into electricity using a concentrator cell, stored in an electrical storage device, and can be supplied to an electric vehicle.

### CITATION LIST

### PATENT LITERATURE

Patent Literature 1: JP-A-2013-104261
Patent Literature 2: JP-A-11-97729
Patent Literature 3: JP-A-2002-249031

### SUMMARY OF INVENTION

### TECHNICAL PROBLEM

An object of the invention is to provide a self-contained energy supply facility that includes an automotive hydrogen fuel supply unit and an electric vehicle charger that utilize sunlight, wherein a concentrator panel for solar energy that includes a solar tracker is installed on a roof within the energy supply facility, a concentrator grid included in the concentrator panel separately concentrates infrared light whereby the solar energy can be easily converted into heat, and visible light whereby the solar energy can be easily converted into electricity, the infrared light is removed in the form of heat, stored in a boiler that utilizes concentrated light, and introduced into a medium-temperature steam electrolyzer to produce hydrogen, the hydrogen is stored in a hydrogen tank in a pressurized state, and can be supplied to a hydrogen-fueled vehicle that uses hydrogen as a fuel, and the visible light is converted into electricity using a concentrator cell included in the concentrator panel, stored in an electrical storage device, and can be supplied to an electric vehicle.

The invention aims to provide a next-generation energy supply station for a hydrogen-fueled vehicle and an electric vehicle by providing the self-contained energy supply facility that includes an automotive hydrogen fuel supply unit and an electric vehicle charger that utilize sunlight. The invention thus provides an energy supply facility that can supply a safe and inexpensive hydrogen fuel and electricity for an electric vehicle without requiring to transport a dangerous substance (e.g., gasoline, LPG gas, and hydrogen gas) from a production factory to each supply station using a tank truck (differing from a known energy supply station).

### SOLUTION TO PROBLEM

According to one aspect of the invention, a self-contained energy supply facility includes an automotive hydrogen fuel supply unit and an electric vehicle charger that utilize sunlight, the energy supply facility being characterized in that a concentrator panel for solar energy that includes a solar tracker is installed on a roof within the energy supply facility, a concentrator grid included in the concentrator panel separately concentrates infrared light whereby the solar energy can be easily converted into heat, and visible light whereby the solar energy can be easily converted into electricity, the infrared light is removed in the form of heat, stored in a boiler that utilizes concentrated light, and introduced into a medium-temperature steam electrolyzer to produce hydrogen, the hydrogen is stored in a hydrogen tank in a pressurized state, and can be supplied to a hydrogen-fueled vehicle that uses hydrogen as a fuel through the automotive hydrogen fuel supply unit, and the visible light is converted into electricity using a concentrator cell, stored in an electrical storage device, and can be supplied to an electric vehicle through the electric vehicle charger.

According to another aspect of the invention, a self-contained energy supply facility includes an automotive hydrogen fuel supply unit and an electric vehicle charger that utilize sunlight, the energy supply facility being characterized in that a concentrator panel for solar energy that includes a solar tracker is installed on a roof within the energy supply facility, each of a plurality of concentrator grids included in the concentrator panel includes a Fresnel lens that is provided on a light-incident side of a housing, and concentrates sunlight, visible light included in the sunlight that has been concentrated through the Fresnel lens is reflected by a visible light reflection filter that is provided to a middle part of the housing, the visible light reflection filter being tilted by 45° with respect to the Fresnel lens, and reflecting only visible light, the visible light reflected by the visible light reflection filter enters a concentrator cell through a correction prism lens, and is converted into electricity, the electricity is stored in an electrical storage device by means of a system controller via a lead, and can be supplied to an electric vehicle by means of a power supply controller and the electric vehicle charger, infrared light that has passed through the visible light reflection filter is reflected and concentrated by an infrared light reflection mirror that is provided to a lower part of the visible light reflection filter, and is tilted by 45° with respect to the Fresnel lens, concentrated on an optical fiber inlet through a correction condenser lens, and applied to a heat-exchange pipe of a boiler that utilizes concentrated light, water that is circulated through the heat-exchange pipe is heated to produce steam, the steam is converted into medium-temperature steam using a steam heater, the medium-temperature steam is introduced into a medium-temperature steam electrolyzer to produce hydrogen and oxygen, and the hydrogen is stored in a hydrogen tank, and can be supplied to a hydrogen-fueled vehicle from the hydrogen fuel supply unit via a secondary pressurization device.

The self-contained energy supply facility may be configured so that a plurality of the concentrator panels are installed on the roof within the energy supply facility, each of the plurality of concentrator panels includes an angle adjustment mechanism and a rotation mechanism so that sunlight can be efficiently concentrated by driving the angle adjustment mechanism and the rotation mechanism using the solar tracker, and each of the plurality of concentrator panels is configured to be foldable within a concentrator panel support frame so that each of the plurality of concentrator panels can be folded, or can be folded and stored indoors, during nighttime, after sunset, or when weather conditions are bad.

The self-contained energy supply facility may be configured so that infrared light that has passed through a visible light reflection filter within the concentrator grid of the concentrator panel is reflected and concentrated by an infrared light reflection mirror that is provided to a lower part of the visible light reflection filter, and is tilted by 45° with respect to the Fresnel lens, concentrated on an optical fiber inlet through a correction condenser lens, and applied to a heat-exchange pipe of a boiler that utilizes concentrated light, water that is circulated through the heat-exchange pipe is heated to produce steam, the steam is heated using a steam heater to produce medium-temperature steam, the medium-temperature steam is continuously supplied to an electrolytic cell in which a porous cathode is provided on one side of an electrolyte, and a porous anode is provided on the other side of the electrolyte, while applying a voltage between the porous cathode and the porous anode to effect electrolysis to produce hydrogen and oxygen, and the hydrogen is stored in a hydrogen tank, and can be supplied to a hydrogen-fueled vehicle from the hydrogen fuel supply unit via a secondary pressurization device.

The self-contained energy supply facility may be configured so that hydrogen and oxygen that have been produced by the medium-temperature steam electrolyzer and stored in a hydrogen tank and an oxygen tank are supplied to a fuel cell provided within the energy supply facility to generate electricity, and the electricity is stored in the electrical storage device to increase the amount of electricity stored in the electrical storage device.

### ADVANTAGEOUS EFFECTS OF INVENTION

The invention provides a next-generation energy supply station for a hydrogen-fueled vehicle and an electric vehicle by providing the self-contained energy supply facility that includes an automotive hydrogen fuel supply unit and an electric vehicle charger that utilize sunlight. The invention thus provides an energy supply facility that can supply a safe and inexpensive hydrogen fuel and electricity for an electric vehicle without requiring to transport a dangerous substance (e.g., gasoline, LPG gas, and hydrogen gas) from a production factory to each supply station using a tank truck (differing from a known energy supply station).

The invention can provide a self-contained energy supply facility that can supply a hydrogen fuel for a hydrogen-fueled vehicle and clean energy for an electric vehicle by effectively utilizing solar energy to a maximum extent using a concentrator panel that can efficiently collect solar energy.

The invention makes it possible to widely utilize solar energy by configuring the self-contained energy supply facility so that visible light whereby solar energy can be easily converted into electricity, and infrared light whereby solar energy can be easily converted into heat, are separately concentrated within each grid, the visible light is converted into electricity using the concentrator cell, and the electricity is stored in the electrical storage device, while the infrared light can be removed in the form of heat, and converted into steam using the boiler that utilizes concentrated light, hydrogen and oxygen are produced using the medium-temperature steam electrolyzer that can efficiently produce hydrogen, the hydrogen is used as a fuel for a hydrogen-fueled vehicle and a fuel for a fuel cell, and the oxygen is used as a fuel for a fuel cell.

### BRIEF DESCRIPTION OF DRAWINGS

FIG. 1 is a view illustrating one embodiment of the invention.
FIG. 2 is a perspective view illustrating a solar tracker illustrated in FIG. 1.
FIG. 3 is an enlarged cross-sectional view illustrating the part indicated by A-A in FIG. 2.
FIG. 4 is a view illustrating a boiler that utilizes concentrated light illustrated in FIG. 1.
FIG. 5 is a view illustrating a medium-temperature steam electrolyzer illustrated in FIG. 1.

### DESCRIPTION OF EMBODIMENTS

A self-contained energy supply facility according to one embodiment of the invention includes an automotive hydrogen fuel supply unit and an electric vehicle charger that utilize sunlight, the energy supply facility being characterized in that a concentrator panel unit for solar energy that includes a solar tracker is installed on a roof within the energy supply facility, a concentrator grid included in the concentrator panel unit separately concentrates infrared light whereby the solar energy can be easily converted into heat, and visible light whereby the solar energy can be easily converted into electricity, the infrared light is removed in the form of heat, stored in a boiler that utilizes concentrated light, and introduced into a medium-temperature steam electrolyzer to produce hydrogen, the hydrogen is stored in a hydrogen tank in a pressurized state, and can be supplied to a hydrogen-fueled vehicle that uses hydrogen as a fuel through the automotive hydrogen fuel supply unit, and the visible light is converted into electricity using a concentrator cell, stored in an electrical storage device, and can be supplied to an electric vehicle through the electric vehicle charger.

A self-contained energy supply facility according to another embodiment of the invention includes an automotive hydrogen fuel supply unit and an electric vehicle charger that utilize sunlight, the energy supply facility being characterized in that a concentrator panel unit for solar energy that includes a solar tracker is installed on a roof within the energy supply facility, each of a plurality of concentrator grids included in the concentrator panel unit includes a Fresnel lens that is provided on a light-incident side of a housing, and concentrates sunlight, visible light included in the sunlight that has been concentrated through the Fresnel lens is reflected by a visible light reflection filter that is provided to a middle part of the housing, the visible light reflection filter being tilted by 45° with respect to the Fresnel lens, and reflecting only visible light, the visible light reflected by the visible light reflection filter enters a concentrator cell through a correction prism lens, and is converted into electricity, the electricity is stored in an electrical storage device by means of a system controller via a lead, and can be supplied to an electric vehicle by means of a power supply controller and the electric vehicle charger, infrared light that has passed through the visible light reflection filter is reflected and concentrated by an infrared light reflection mirror that is provided to a lower part of the visible light reflection filter, and is tilted by 45° with respect to the Fresnel lens, concentrated on an optical fiber inlet through a correction condenser lens, and applied to a heat-exchange pipe of a boiler that utilizes concentrated light, water that is circulated through the heat-exchange pipe is heated to produce steam, the steam is converted into medium-temperature steam using a steam heater, the medium-temperature steam is introduced into a medium-temperature steam electrolyzer to produce hydrogen and oxygen, and the hydrogen is stored in a hydrogen tank, and can be supplied to a hydrogen-fueled vehicle from the hydrogen fuel supply unit via a secondary pressurization device.

The self-contained energy supply facility may include a highly efficient concentrator panel that concentrates sunlight, wherein each concentrator grid of the concentrator panel forms a hollow housing, a Fresnel lens that concentrates sunlight is provided on a light-incident side of each housing, sunlight that has been concentrated through the Fresnel lens is incident on a visible light reflection filter that is provided to a middle part of each housing, the visible light reflection filter being tilted by 45° with respect to the Fresnel lens, and reflecting only visible light, a concentrator cell is provided to a side wall of each housing that is situated opposite to the visible light reflection filter through a correction prism lens, the concentrator cell is connected to an electrical storage device through a control board via a lead, an infrared light reflection mirror is provided to a lower part of the visible light reflection filter, the infrared light reflection mirror being tilted by 45° with respect to the Fresnel lens, an optical fiber inlet is provided to the side wall of each housing that is situated opposite to the infrared light reflection mirror through a correction condenser lens, an optical fiber that has the optical fiber inlet is connected to a thermoelectric converter that is included in a boiler that utilizes concentrated light, and the hollow housings formed by the concentrator grids are arranged in a rightward direction, a leftward direction, an upward direction, and a downward direction to form a panel-shaped plate that is fitted into a concentrator panel frame.

The self-contained energy supply facility may include a concentrator panel that concentrates sunlight, wherein each concentrator grid of the concentrator panel forms a hollow housing, a Fresnel lens that concentrates sunlight is provided to a light-incident side of each housing, the sunlight that has been concentrated through the Fresnel lens is reflected by a visible light reflection filter that is provided to a middle part of each housing, the visible light reflection filter being tilted by 45° with respect to the Fresnel lens, and reflecting only visible light, the sunlight that has been reflected by the visible light reflection filter enters a concentrator cell through a correction prism lens, and is converted into electricity, the electricity is stored in an electrical storage device through a control board via a lead, and infrared light that has passed through the visible light reflection filter is reflected and concentrated by an infrared light reflection mirror that is provided to a lower part of the visible light reflection filter, and is tilted by 45° with respect to the Fresnel lens, concentrated on an optical fiber inlet through a correction condenser lens, and stored in the form of heat in a boiler that utilizes concentrated light that includes a thermoelectric converter through an optical fiber.

The self-contained energy supply facility preferably includes a boiler that utilizes solar energy, wherein each of a plurality of concentrator grids included in a concentrator panel used for the self-contained energy supply facility forms a hollow housing, a Fresnel lens that concentrates sunlight is provided to a light-incident side of each housing, sunlight that has been concentrated through the Fresnel lens is reflected by a visible light reflection filter that is provided to a middle part of each housing, the visible light reflection filter being tilted by 45° with respect to the Fresnel lens, and reflecting only visible light, visible light that has been reflected by the visible light reflection filter enters a concentrator cell through a correction prism lens, and is converted into electricity, the electricity is stored in an electrical storage device through a control board via a lead, infrared light that has passed through the visible light reflection filter is reflected and concentrated by an infrared light reflection mirror that is provided to a lower part of the visible light reflection filter, and is tilted by 45° with respect to the Fresnel lens, concentrated on an optical fiber inlet through a correction condenser lens, and applied to a heat-exchange pipe through an inlet of a boiler that utilizes concentrated light to heat water that is circulated through the heat-exchange pipe to produce high-temperature steam, and the high-temperature steam is stored in a boiler tank that is covered with an insulating material.

The self-contained energy supply facility is preferably configured so that a plurality of the concentrator panel units are installed on the roof within the energy supply facility, each of the plurality of concentrator panel units includes an angle adjustment mechanism and a rotation mechanism so that sunlight can be efficiently concentrated by driving the angle adjustment mechanism and the rotation mechanism using the solar tracker, and each of the plurality of concentrator panel units is configured to be foldable within a concentrator panel support frame so that each of the plurality of concentrator panel units can be folded, or can be folded and stored indoors, during nighttime, after sunset, or when weather conditions are bad.

The self-contained energy supply facility is preferably configured so that infrared light that has passed through a visible light reflection filter within the concentrator grid of the concentrator panel unit is reflected and concentrated by an infrared light reflection mirror that is provided to a lower part of the visible light reflection filter, and is tilted by 45° with respect to the Fresnel lens, concentrated on an optical fiber inlet through a correction condenser lens, and applied to a heat-exchange pipe of a boiler that utilizes concentrated light, water that is circulated through the heat-exchange pipe is heated to produce steam, the steam is heated using a steam heater to produce medium-temperature steam, the medium-temperature steam is continuously supplied to an electrolytic cell in which a porous cathode is provided on one side of an electrolyte, and a porous anode is provided on the other side of the electrolyte, while applying a voltage between the porous cathode and the porous anode to effect electrolysis to produce hydrogen and oxygen, and the hydrogen is stored in a hydrogen tank, and can be supplied to a hydrogen-fueled vehicle from the hydrogen fuel supply unit via a secondary pressurization device.

The self-contained energy supply facility is preferably configured so that hydrogen and oxygen that have been produced by the medium-temperature steam electrolyzer and stored in a hydrogen tank and an oxygen tank are supplied to a fuel cell provided within the energy supply facility to generate electricity, and the electricity is stored in the electrical storage device to increase the amount of electricity stored in the electrical storage device.

The invention provides a next-generation energy supply station for a hydrogen-fueled vehicle and an electric vehicle by providing the self-contained energy supply facility that includes an automotive hydrogen fuel supply unit and an electric vehicle charger that utilize sunlight. The invention thus provides an energy supply facility that can supply a safe and inexpensive hydrogen fuel and electricity for an electric vehicle without requiring to transport a dangerous substance (e.g., gasoline, LPG gas, and hydrogen gas) from a production factory to each supply station using a tank truck (differing from a known energy supply station).

The invention can provide a self-contained energy supply facility that can supply a hydrogen fuel for a hydrogen-fueled vehicle and clean energy for an electric vehicle by effectively utilizing solar energy to a maximum extent.

The invention makes it possible to widely utilize solar energy by configuring the self-contained energy supply facility so that visible light whereby solar energy can be easily converted into electricity, and infrared light whereby solar energy can be easily converted into heat, are separately concentrated within each grid, the visible light is converted into electricity using the concentrator cell, and the electricity is stored in the electrical storage device, while the infrared light can be removed in the form of heat, and converted into steam using the boiler that utilizes concentrated light, hydrogen and oxygen are produced using the medium-temperature steam electrolyzer that can efficiently produce hydrogen, the hydrogen is used as a fuel for a hydrogen-fueled vehicle and a fuel for a fuel cell, and the oxygen is used as a fuel for a fuel cell.

### First embodiment

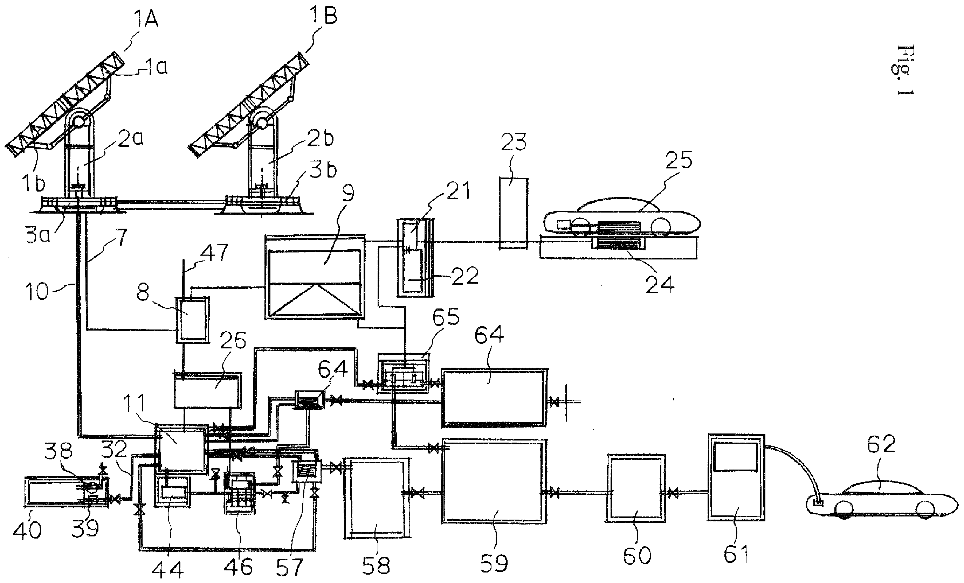

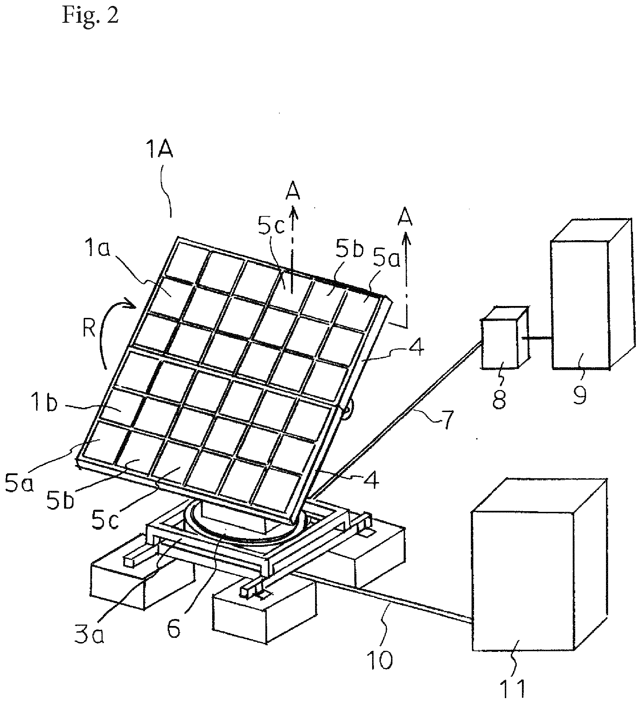

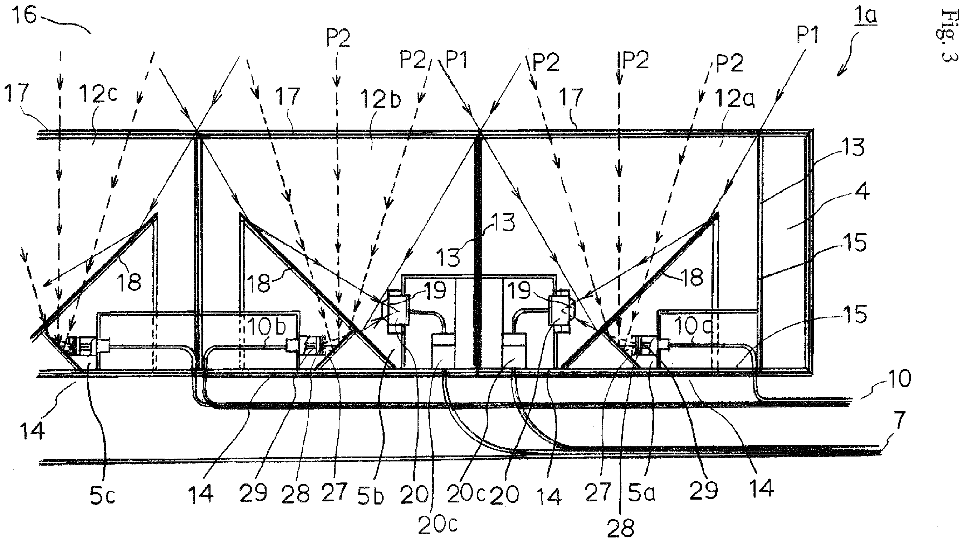

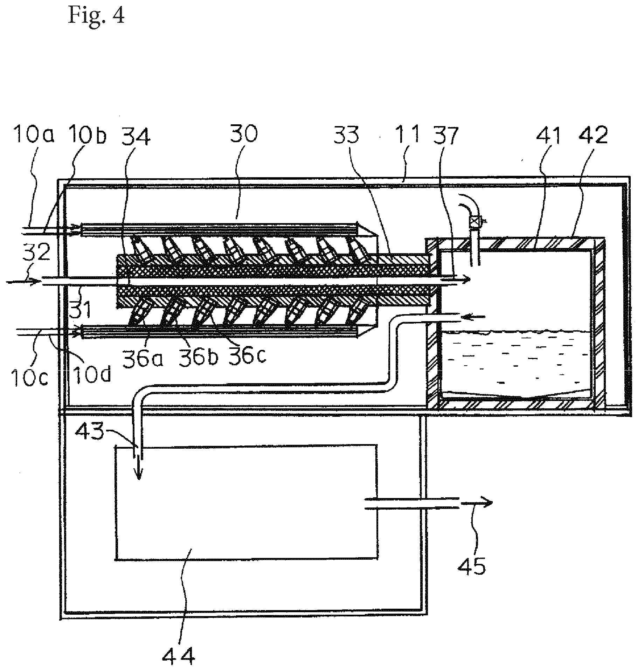

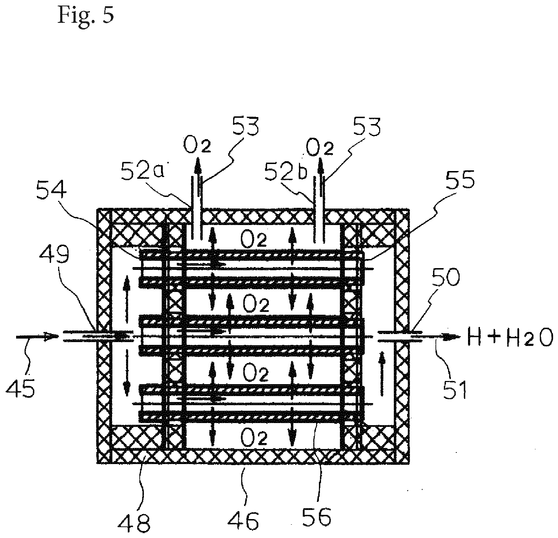

FIG. 1 is a view illustrating a first embodiment of the invention, FIG. 2 is a perspective view illustrating a solar tracker illustrated in FIG. 1, FIG. 3 is an enlarged cross-sectional view illustrating the part indicated by A-A in FIG. 2, FIG. 4 is a view illustrating a boiler that utilizes concentrated light illustrated in FIG. 1, and FIG. 5 is a view illustrating a medium-temperature steam electrolyzer illustrated in FIG. 1.

In FIG. 1, reference signs 1A and 1B indicate concentrator panel units that are provided so that the panel surface receives sunlight, reference signs 2a and 2b indicate solar trackers that can arbitrarily rotate the entirety of the concentrator panel unit 1A or 1B, and can adjust the angle of the concentrator panel unit 1A or 1B so that the concentrator panel unit 1A or 1B necessarily receives sunlight, and reference signs 3a and 3b indicate concentrator panel supports. The concentrator panel units 1A and 1B are installed on the roof (not illustrated in FIG. 1) within an energy supply facility through the concentrator panel supports 3a and 3b. The number of concentrator panel units 1A and 1B that are installed on the roof of the energy supply facility may be increased taking account of the scale of the energy supply facility.

FIG. 2 illustrates the solar tracker illustrated in FIG. 1. Reference sign 1A indicates the concentrator panel unit. The concentrator panel unit 1A includes two concentrator panels 1a and 1b that can be folded in the direction indicated by the arrow R. Each of the concentrator panels 1a and 1b is fitted into a concentrator panel frame 4 to form the concentrator panel unit 1A. The concentrator panels 1a and 1b include concentrator grids 5a, 5b, 5c, and the like. The concentrator panels 1a and 1b of the concentrator panel unit 1A that include the concentrator grids 5a, 5b, 5c, and the like are placed on a rotating plate 6 that can be rotated, and can be adjusted in angle, or can track the direction and the altitude of the sun in a state in which the concentrator panels 1a and 1b are placed on the rotating plate 6 (see the solar trackers 2a and 2b illustrated in FIG. 1). The concentrator panels 1a and 1b of the concentrator panel unit 1A are installed on the roof or a building, or installed outdoors, and can be folded (or can be folded and stored indoors, for example) during nighttime (after sunset), or when the weather conditions are bad (e.g., during a typhoon).

The concentrator grids 5a, 5b, 5c, and the like that are fitted into the concentrator panel frame are configured so that visible light P1 whereby solar energy can be easily converted into electricity, and infrared light P2 whereby solar energy can be easily converted into heat, are separately concentrated. The visible light P1 is converted into electricity by means of a concentrator cell 20, and the electricity is stored in an electrical storage device 9 by means of a system controller 8 via a lead 7. The infrared light P2 is removed through an optical fiber 10 in the form of heat, and introduced into a boiler 11 that utilizes concentrated light (see FIG. 1).

The configuration of the concentrator panel unit 1A and the concentrator panels 1a and 1b is described below with reference to FIG. 3. As illustrated in FIG. 3, the concentrator grids 5a, 5b, 5c, and the like form hollow housings 12a, 12b, 12c, and the like, and aluminum cover materials 15 are bonded to a side wall 13 and a bottom 14 of each of the housings 12a, 12b, 12c, and the like. A Fresnel lens 17 that concentrates sunlight is provided on the light-incident side 16 of each of the housings 12a, 12b, 12c, and the like. A visible light reflection filter 18 is provided to the middle part of each of the housings 12a, 12b, 12c, and the like, the visible light reflection filter 18 being tilted by 45° with respect to the Fresnel lens 17, and reflecting only visible light. The concentrator cell 20 is provided to the side wall 13 of each of the housings 12a, 12b, 12c, and the like that is situated opposite to the visible light reflection filter 18 through a correction prism lens 19. The concentrator cell 20 is connected to the electrical storage device 6 (see FIG. 1) through a cell control board 20c via the lead 7.

The self-contained energy supply facility according to the first embodiment of the invention utilizes the concentrator panel that concentrates sunlight, wherein the concentrator grids 5a and 5b of the concentrator panels 1a and 1b that are used for the self-contained energy supply facility respectively form the hollow housings 12a, 12b, 12c, and the like, the Fresnel lens 17 that concentrates sunlight is provided on the light-incident side 16 of each of the housings 12a, 12b, 12c, and the like, sunlight that has been concentrated through the Fresnel lens 17 is incident on the visible light reflection filter 18 that is provided to the middle part of each of the housings 12a, 12b, 12c, and the like, the visible light reflection filter 18 being tilted by 45° with respect to the Fresnel lens 17, and reflecting only the visible light P1, the concentrator cell 20 is provided to the side wall 13 of each of the housings 12a, 12b, 12c, and the like that is situated opposite to the visible light reflection filter 18 through the correction prism lens 19, the concentrator cell 20 is connected to the electrical storage device 6 through the cell control board 20c via the lead 7, an infrared light reflection mirror 27 is provided to the lower part of the visible light reflection filter 18, the infrared light reflection mirror 27 being tilted by 45° with respect to the Fresnel lens 17, an optical fiber inlet 29 is provided to the side wall 13 of each of the housings 12a, 12b, 12c, and the like that is situated opposite to the infrared light reflection mirror 27 through a correction condenser lens 28, an optical fiber 10 that has the optical fiber inlet 29 is connected to a thermoelectric converter 30 that is included in the boiler 11, and the hollow housings 12a, 12b, 12c, and the like that are formed by the concentrator grids 5a, 5b, 5c, and the like are arranged in the rightward direction, the leftward direction, the upward direction, and the downward direction to form a panel-shaped plate that is fitted into the concentrator panel frame.

The self-contained energy supply facility according to the first embodiment of the invention utilizes the concentrator panel that concentrates sunlight, wherein the concentrator grids 5a, 5b, 5c, and the like of the concentrator panels 1a and 1b that are used for the self-contained energy supply facility respectively form the hollow housings 12a, 12b, 12c, and the like, the Fresnel lens 17 that concentrates sunlight is provided on the light-incident side 16 of each of the housings 12a, 12b, 12c, and the like, sunlight that has been concentrated through the Fresnel lens 17 is reflected by the visible light reflection filter 18 that is provided to the middle part of each of the housings 12a, 12b, 12c, and the like, the visible light reflection filter 18 being tilted by 45° with respect to the Fresnel lens 17, and reflecting only the visible light P1, the sunlight that has been reflected by the visible light reflection filter 18 enters the concentrator cell 20 through the correction prism lens 19, and is converted into electricity, the electricity is stored in the electrical storage device 9 by means of the cell control board 20c via the lead 7, the infrared light P2 that has passed through the visible light reflection filter 18 is reflected and concentrated by the infrared light reflection mirror 27 that is provided to the lower part of the visible light reflection filter 18, and is tilted by 45° with respect to the Fresnel lens 17, concentrated on the optical fiber inlet 29 through the correction condenser lens 28, and stored in the form of heat in the boiler 11 that includes the thermoelectric converter 30 through the optical fiber 10.

The concentrator panels 1a and 1b are configured so that the concentrator grids 5a, 5b, 5c, and the like of the concentrator panels 1a and 1b respectively form the hollow housings 12a, 12b, 12c, and the like, the Fresnel lens 17 that concentrates sunlight is provided on the light-incident side 16 of each of the housings 12a, 12b, 12c, and the like, sunlight that has been concentrated through the Fresnel lens 17 is reflected by the visible light reflection filter 18 that is provided to the middle part of each of the housings 12a, 12b, 12c, and the like, the visible light reflection filter 18 being tilted by 45° with respect to the Fresnel lens 17, and reflecting only the visible light P1, the sunlight that has been reflected by the visible light reflection filter 18 enters the concentrator cell 20 through the correction prism lens 19, and is converted into electricity, and the electricity is stored in the electrical storage device 9 that is connected to and controlled by the system controller 8 (see FIGS. 1 and 2) via the lead 7.

FIG. 1 illustrates a method for using electricity stored in the electrical storage device 6. Electricity stored in the electrical storage device 6 is introduced into an electric vehicle charger 23 by means of a power supply controller 22 that includes an inverter 21, and is supplied to an electric vehicle 25 by means of an electromagnetic induction-type stationary charger 24 that is buried in the floor within the energy supply facility, for example.

The configuration illustrated in FIG. 3 that concentrates the infrared light P2 to remove heat is characterized in that the infrared light reflection mirror 27 is provided to the lower part of the visible light reflection filter 18 that is provided within each of the housings 12a, 12b, 12c, and the like, the infrared light reflection mirror 27 being tilted by 45° with respect to the Fresnel lens 17, the optical fiber inlet 29 is provided to the side wall 13 of each of the housings 12a, 12b, 12c, and the like that is situated opposite to the infrared light reflection mirror 27 through the correction condenser lens 28, the optical fibers 10, 10a, 10b, 10c, ... having the optical fiber inlet 29 are connected to the boiler 11 (see FIG. 1), and the hollow housings 12a, 12b, 12c, and the like that are formed by the concentrator grids 5a, 5b, 5c, and the like are arranged in the rightward direction, the leftward direction, the upward direction, and the downward direction to form a panel-shaped plate that is fitted into the concentrator panel frame 4.

The structure of the boiler 11 is described below with reference to FIG. 4. As illustrated in FIG. 4, the boiler 11 includes the thermoelectric converter 30. The thermoelectric converter 30 receives water 32 through an external water introduction pipe 31, and supplies the water 32 to a heat-exchange pipe 34 included in the thermoelectric converter 30 that is covered with an insulating holding material 33. The infrared light P2 that has been concentrated through the correction condenser lens 28 is supplied to the thermoelectric converter 30 through the optical fibers 10a, 10b, 10c, 10d, and the like that are provided to an outer circumferential part 35. The infrared light P2 supplied to the thermoelectric converter 30 through the optical fibers 10a, 10b, 10c, 10d, and the like is converted into heat. The concentrated infrared light P2 is applied to the heat-exchange pipe 34 included in the thermoelectric converter 30 through outlets 36a, 36b, 36c, and the like of the optical fibers 10a, 10b, 10c, 10d, and the like, and heats the water 32 that is circulated through the heat-exchange pipe 34 to produce steam 37.

When a plurality of thermoelectric converters 30 are provided to the boiler 11, it is possible to efficiently convert the infrared light P2 from a larger number of concentrator panel units 1A, 1B, 1C, and the like into heat.

The water 32 that is supplied through the external water introduction pipe 31 is supplied from an external infrastructure that supplies water to a water tank 40 that includes a filter 38 and a circulation pump 39 (see FIG. 1).

The steam 37 is supplied to a boiler tank 42 that is covered with an insulating material 41 through the heat-exchange pipe 34. The steam 37 is introduced into a steam heater 44 through a steam inlet 43, and passed through a high-temperature heater (e.g., electrothermal steam heater and high-frequency steam heater) provided to the steam heater 44. The steam 37 can thus be reheated to produce medium-temperature steam 45 (temperature: about 500°C). The medium-temperature steam 45 is introduced into a medium-temperature steam electrolyzer 46 to produce hydrogen and oxygen.

The steam heater 44 is driven using electricity that has been supplied from the concentrator grids 5a, 5b, 5c, and the like and stored in the electrical storage device 9. Note that electricity may be supplied from an external infrastructure (preliminary primary power supply 47) through the system controller 8 and an energy converter controller 26.

Specifically, the self-contained energy supply facility according to the first embodiment utilizes the boiler 11 that utilizes solar energy, wherein the concentrator grids 5a, 5b, 5c, and the like of the concentrator panels 1a and 1b respectively form the hollow housings 12a, 12b, 12c, and the like, the Fresnel lens 17 that concentrates sunlight is provided on the light-incident side 16 of each of the housings 12a, 12b, 12c, and the like, sunlight that has been concentrated through the Fresnel lens 17 is reflected by the visible light reflection filter 18 that is provided to the middle part of each of the housings 12a, 12b, 12c, and the like, the visible light reflection filter 18 being tilted by 45° with respect to the Fresnel lens 17, and reflecting only the visible light P1, the sunlight that has been reflected by the visible light reflection filter 18 enters the concentrator cell through the correction prism lens 19, and is converted into electricity, the electricity is stored in the electrical storage device 9 through the cell control board 20c via the lead 7, the infrared light P2 that has passed through the visible light reflection filter 18 is reflected and concentrated by the infrared light reflection mirror 27 that is provided to the lower part of the visible light reflection filter 18, and is tilted by 45° with respect to the Fresnel lens 17, concentrated on the optical fiber inlet 29 (see FIG. 3) through the correction condenser lens 28, and applied to the heat-exchange pipe 34 through the outlets 36a, 36b, 36c, and the like of the boiler 11 to heat water that is circulated through the heat-exchange pipe to produce the medium-temperature steam 45, and the medium-temperature steam 45 is stored in the boiler tank that is covered with the insulating material 41.

The structure of the medium-temperature steam electrolyzer 46 is described below with reference to FIG. 5. In FIG. 5, reference sign 48 indicates a housing that is formed of an insulator, reference sign 49 indicates a steam inlet through which the medium-temperature steam 45 is supplied to the inside of the housing, reference sign 50 indicates an outlet for removing hydrogen 51 produced, and reference signs 52a and 52b indicate outlets for removing oxygen 53 produced. The housing 48 that is formed of an insulator includes a plurality of electrolytic cells 56 formed by ceramic pipes in which a cathode 54 (i.e., porous electrode) is provided on one side of an electrolyte, and an anode 55 (i.e., porous electrode) is provided on the other side of the electrolyte. The medium-temperature steam 45 is continuously supplied to the cathode 54 while applying a voltage between the cathode 54 and the anode 55 to electrolyze the medium-temperature steam 45 to separate the medium-temperature steam 45 into the hydrogen 51 (and water) and the oxygen 53.

The hydrogen 51 is introduced into a primary pressurization device 58 through a hydrogen gas separator 57 (see FIG. 1), stored in a hydrogen tank 59, supplied to a hydrogen fuel supply unit 61 through a secondary pressurization device 60, and supplied to a hydrogen-fueled vehicle 62 using the hydrogen fuel supply unit 61.

The oxygen 53 produced by the medium-temperature steam electrolyzer 46 is stored in an oxygen tank 64 through an oxygen gas cooling unit 63 (see FIG. 1), and supplied as a fuel for a fuel cell vehicle. The oxygen 53 is also used as a fuel for a fuel cell 65 provided to the energy supply facility according to the invention. Electricity generated by the fuel cell 65 is stored in the electrical storage device 9 through electrical wiring 66, and is also supplied to the power supply controller 22 of the electric vehicle charger 23.

As described above, the self-contained energy supply facility according to the first embodiment of the invention includes an automotive hydrogen fuel supply unit and an electric vehicle charger that utilize sunlight, the energy supply facility being characterized in that the concentrator panel units 1A and 1B for solar energy that include the solar trackers 2a and 2b are installed on the roof within the energy supply facility (see FIG. 1), the concentrator grids 5a, 5b, 5c, and the like included in the concentrator panel units 1A and 1B separately concentrate the infrared light P2 whereby the solar energy can be easily converted into heat, and the visible light P1 whereby the solar energy can be easily converted into electricity, the infrared light P2 is removed in the form of heat, stored in the boiler 11, and introduced into the medium-temperature steam electrolyzer 46 to produce hydrogen, the hydrogen is stored in the hydrogen tank 59 in a pressurized state, and can be supplied to the hydrogen-fueled vehicle 62 that uses hydrogen as a fuel through the automotive hydrogen fuel supply unit 61, and the visible light P1 is converted into electricity using the concentrator cell 20, stored in the electrical storage device 9, and can be supplied to an electric vehicle through the electric vehicle charger 23.

The first embodiment of the invention provides a next-generation energy supply station for a hydrogen-fueled vehicle and an electric vehicle by providing the self-contained energy supply facility that includes an automotive hydrogen fuel supply unit and an electric vehicle charger that utilize sunlight. The first embodiment of the invention thus provides an energy supply facility that can supply a safe and inexpensive hydrogen fuel and electricity for an electric vehicle without requiring to transport a dangerous substance (e.g., gasoline, LPG gas, and hydrogen gas) from a production factory to each supply station using a tank truck (differing from a known energy supply station).

The first embodiment of the invention can provide a self-contained energy supply facility that can supply a hydrogen fuel for a hydrogen-fueled vehicle and clean energy for an electric vehicle by effectively utilizing solar energy to a maximum extent.

The first embodiment of the invention makes it possible to widely utilize solar energy by configuring the self-contained energy supply facility so that visible light whereby solar energy can be easily converted into electricity, and infrared light whereby solar energy can be easily converted into heat, are separately concentrated within each grid, the visible light is converted into electricity using the concentrator cell, and the electricity is stored in the electrical storage device, while the infrared light can be removed in the form of heat, and converted into steam using the boiler that utilizes concentrated light, hydrogen and oxygen are produced using the medium-temperature steam electrolyzer that can efficiently produce hydrogen, the hydrogen is used as a fuel for a hydrogen-fueled vehicle and a fuel for a fuel cell, and the oxygen is used as a fuel for a fuel cell.

### Second embodiment

FIGS. 1 to 5 illustrate a second embodiment of the invention. FIG. 1 is a view illustrating the second embodiment of the invention, FIG. 2 is a perspective view illustrating a solar tracker illustrated in FIG. 1, FIG. 3 is an enlarged cross-sectional view illustrating the part indicated by A-A in FIG. 2, FIG. 4 is a view illustrating a boiler that utilizes concentrated light illustrated in FIG. 1, and FIG. 5 is a view illustrating a medium-temperature steam electrolyzer illustrated in FIG. 1.

A self-contained energy supply facility according to the second embodiment includes an automotive hydrogen fuel supply unit and an electric vehicle charger that utilize sunlight, the energy supply facility being characterized in that the concentrator panel units 1A, 1B, and the like for solar energy that include a solar tracker are installed on the roof within the energy supply facility, each of a plurality of concentrator grids 5a, 5b, 5c, and the like included in the concentrator panel units 1A, 1B, and the like include the Fresnel lens 17 that is provided on the light-incident side 16 of each of the housings 12a, 12b, 12c, and the like, and concentrates sunlight, the visible light P1 included in the sunlight that has been concentrated through the Fresnel lens 17 is reflected by the visible light reflection filter 18 that is provided to the middle part of the housing, the visible light reflection filter 18 being tilted by 45° with respect to the Fresnel lens 17, the visible light P1 reflected by the visible light reflection filter 18 enters the concentrator cell 20 through the correction prism lens 19, and is converted into electricity, the electricity is stored in the electrical storage device 9 through the system controller 8 via the lead 7, and can be supplied to the electric vehicle 25 through the power supply controller 22 and the electric vehicle charger 23, the infrared light P2 that has passed through the visible light reflection filter 18 is reflected and concentrated by the infrared light reflection mirror 27 that is provided to the lower part of the visible light reflection filter 18, and is tilted by 45° with respect to the Fresnel lens 17, concentrated on the optical fiber inlet 29 through the correction condenser lens 28, and applied to the heat-exchange pipe 34 of the boiler 11 to heat water that is circulated through the heat-exchange pipe 34 to produce steam, the steam is converted into medium-temperature steam through the steam heater 44, the medium-temperature steam is introduced into the medium-temperature steam electrolyzer 46 to produce hydrogen and oxygen, and the hydrogen is stored in the hydrogen tank 59, and can be supplied to the hydrogen-fueled vehicle 62 through the hydrogen fuel supply unit 61 via the secondary pressurization device 60.

According to a modification of the second embodiment, a plurality of concentrator panel units 1A, 1B, and the like are installed on the roof within the energy supply facility, each of the concentrator panel units 1A, 1B, and the like includes an angle adjustment mechanism and a rotation mechanism so that sunlight can be efficiently concentrated by driving the angle adjustment mechanism and the rotation mechanism using the solar trackers 2a and 2b, and each of the concentrator panel units 1A, 1B, and the like is configured to be foldable within the concentrator panel support frame 4 so that each of the concentrator panel units 1A, 1B, and the like can be folded, or can be folded and stored indoors, during nighttime, after sunset, or when the weather conditions are bad (e.g., during a typhoon).

The infrared light P2 that has passed through the visible light reflection filter 18 within the concentrator grids 5a, 5b, 5c, and the like of the concentrator panel units 1A, 1B, and the like is reflected and concentrated by the infrared light reflection mirror 27 that is provided to the lower part of the visible light reflection filter 18, and is tilted by 45° with respect to the Fresnel lens 17, concentrated on the optical fiber inlet 29 through the correction condenser lens 28, and applied to the heat-exchange pipe 34 of the boiler that utilizes concentrated light to heat water that is circulated through the heat-exchange pipe 34 to produce steam, the steam is heated through the steam heater 44 to produce medium-temperature steam, the medium-temperature steam is continuously supplied to the electrolytic cell 56 in which the porous cathode 54 is provided on one side of the electrolyte, and the porous anode 55 is provided on the other side of the electrolyte, while applying a voltage between the porous cathode 54 and the porous anode 55 to effect electrolysis to produce hydrogen and oxygen, and the hydrogen is stored in the hydrogen tank 59, and can be supplied to the hydrogen-fueled vehicle 62 through the hydrogen fuel supply unit 61 via thea secondary pressurization device 60.

According to the second embodiment, the hydrogen and the oxygen that have been produced by the medium-temperature steam electrolyzer 46 and stored in the hydrogen tank 59 and the oxygen tank 64 are supplied to the fuel cell 65 provided within the energy supply facility to generate electricity, and the electricity is stored in the electrical storage device 9 to increase the amount of electricity stored in the electrical storage device 9.

The second embodiment of the invention provides a next-generation energy supply station for a hydrogen-fueled vehicle and an electric vehicle by providing the self-contained energy supply facility that includes an automotive hydrogen fuel supply unit and an electric vehicle charger that utilize sunlight. The second embodiment of the invention thus provides an energy supply facility that can supply a safe and inexpensive hydrogen fuel and electricity for an electric vehicle without requiring to transport a dangerous substance (e.g., gasoline, LPG gas, and hydrogen gas) from a production factory to each supply station using a tank truck (differing from a known energy supply station).

The second embodiment of the invention can provide a self-contained energy supply facility that can supply a hydrogen fuel for a hydrogen-fueled vehicle and clean energy for an electric vehicle by effectively utilizing solar energy to a maximum extent.

The second embodiment of the invention makes it possible to widely utilize solar energy by configuring the self-contained energy supply facility so that visible light whereby solar energy can be easily converted into electricity, and infrared light whereby solar energy can be easily converted into heat, are separately concentrated within each grid, the visible light is converted into electricity using the concentrator cell, and the electricity is stored in the electrical storage device, while the infrared light can be removed in the form of heat, and converted into steam using the boiler that utilizes concentrated light, hydrogen and oxygen are produced using the medium-temperature steam electrolyzer that can efficiently produce hydrogen, the hydrogen is used as a fuel for a hydrogen-fueled vehicle and a fuel for a fuel cell, and the oxygen is used as a fuel for a fuel cell.

### REFERENCE SIGNS LIST

- 1A, 1B:: Concentrator panel unit
- 1a, 1b:: Concentrator panel
- 2a, 2b:: Solar tracker
- 3a, 3b:: Concentrator panel support
- 4:: Concentrator panel frame
- 5a, 5b, 5c:: Concentrator grid
- 6:: Rotating plate
- 7:: Lead
- 8:: System controller
- 9:: Electrical storage device
- 10, 10a, 10b, 10c:: Optical fiber
- 11:: Boiler that utilizes concentrated light
- 12a, 12b, 12c:: Housing
- 13:: Side wall
- 14:: Bottom
- 15:: Aluminum cover material
- 16:: Light-incident side
- 17:: Fresnel lens
- 18:: Visible light reflection filter
- 19:: Correction prism lens
- 20:: Concentrator cell
- 20c:: Cell control board
- 21:: Inverter
- 22:: Power supply controller
- 23:: Electric vehicle charger
- 24:: Stationary charger
- 25:: Electric vehicle
- 26:: Energy converter controller
- 27:: Infrared light reflection mirror
- 28:: Correction condenser lens
- 29:: Optical fiber inlet
- 30:: Thermoelectric converter
- 31:: External introducing pipe
- 32:: Water
- 33:: Insulating holding material
- 34:: Heat-exchange pipe
- 35:: Outer circumferential part
- 36a, 36b, 36c:: Outlet
- 37:: Steam
- 38:: Filter
- 39:: Circulation pump
- 40:: Water supply tank
- 41:: Insulating material
- 42:: Boiler tank
- 43:: Steam inlet
- 44:: Steam heater
- 45:: Medium-temperature steam
- 46:: Medium-temperature steam electrolyzer
- 47:: Preliminary primary power supply
- 48:: Housing
- 49:: Medium-temperature steam inlet
- 50:: Hydrogen outlet
- 51:: Hydrogen
- 52a, 52b:: Oxygen outlet
- 53:: Oxygen
- 54:: Cathode
- 55:: Anode
- 56:: Electrolytic cell
- 57:: Hydrogen gas separator
- 58:: Primary pressurization device
- 59:: Hydrogen tank
- 60:: Secondary pressurization device
- 61:: Hydrogen fuel supply unit
- 62:: Hydrogen-fueled vehicle
- 63:: Oxygen gas cooling unit
- 64:: Oxygen tank
- 65:: Fuel cell
- 66:: Electrical wiring
- R:: Folding direction
- P1:: Visible light
- P2:: Infrared light

## Claims

1. A self-contained energy supply facility comprising an automotive hydrogen fuel supply unit and an electric vehicle charger that utilize sunlight, the energy supply facility being **characterized in that** a concentrator panel unit for solar energy that includes a solar tracker is installed on a roof within the energy supply facility, a concentrator grid included in the concentrator panel unit separately concentrates infrared light whereby the solar energy can be easily converted into heat, and visible light whereby the solar energy can be easily converted into electricity, the infrared light is removed in the form of heat, stored in a boiler that utilizes concentrated light, and introduced into a medium-temperature steam electrolyzer to produce hydrogen, the hydrogen is stored in a hydrogen tank in a pressurized state, and can be supplied to a hydrogen-fueled vehicle that uses hydrogen as a fuel through the automotive hydrogen fuel supply unit, and the visible light is converted into electricity using a concentrator cell, stored in an electrical storage device, and can be supplied to an electric vehicle through the electric vehicle charger.

2. A self-contained energy supply facility comprising an automotive hydrogen fuel supply unit and an electric vehicle charger that utilize sunlight, the energy supply facility being **characterized in that** a concentrator panel unit for solar energy that includes a solar tracker is installed on a roof within the energy supply facility, each of a plurality of concentrator grids included in the concentrator panel unit includes a Fresnel lens that is provided on a light-incident side of a housing, and concentrates sunlight, visible light included in the sunlight that has been concentrated through the Fresnel lens is reflected by a visible light reflection filter that is provided to a middle part of the housing, the visible light reflection filter being tilted by 45° with respect to the Fresnel lens, and reflecting only visible light, the visible light reflected by the visible light reflection filter enters a concentrator cell through a correction prism lens, and is converted into electricity, the electricity is stored in an electrical storage device by means of a system controller via a lead, and can be supplied to an electric vehicle by means of a power supply controller and the electric vehicle charger, infrared light that has passed through the visible light reflection filter is reflected and concentrated by an infrared light reflection mirror that is provided to a lower part of the visible light reflection filter, and is tilted by 45° with respect to the Fresnel lens, concentrated on an optical fiber inlet through a correction condenser lens, and applied to a heat-exchange pipe of a boiler that utilizes concentrated light, water that is circulated through the heat-exchange pipe is heated to produce steam, the steam is converted into medium-temperature steam using a steam heater, the medium-temperature steam is introduced into a medium-temperature steam electrolyzer to produce hydrogen and oxygen, and the hydrogen is stored in a hydrogen tank, and can be supplied to a hydrogen-fueled vehicle from the hydrogen fuel supply unit via a secondary pressurization device.

3. The self-contained energy supply facility according to claim 1 or 2, comprising a concentrator panel that concentrates sunlight, wherein each concentrator grid of the concentrator panel forms a hollow housing, a Fresnel lens that concentrates sunlight is provided on a light-incident side of each housing, sunlight that has been concentrated through the Fresnel lens is incident on a visible light reflection filter that is provided to a middle part of each housing, the visible light reflection filter being tilted by 45° with respect to the Fresnel lens, and reflecting only visible light, a concentrator cell is provided to a side wall of each housing that is situated opposite to the visible light reflection filter through a correction prism lens, the concentrator cell is connected to an electrical storage device through a control board via a lead, an infrared light reflection mirror is provided to a lower part of the visible light reflection filter, the infrared light reflection mirror being tilted by 45° with respect to the Fresnel lens, an optical fiber inlet is provided to the side wall of each housing that is situated opposite to the infrared light reflection mirror through a correction condenser lens, an optical fiber that has the optical fiber inlet is connected to a thermoelectric converter that is included in a boiler that utilizes concentrated light, and the hollow housings formed by the concentrator grids are arranged in a rightward direction, a leftward direction, an upward direction, and a downward direction to form a panel-shaped plate that is fitted into a concentrator panel frame.

4. The self-contained energy supply facility according to claim 1 or 2, comprising a concentrator panel that concentrates sunlight, wherein each concentrator grid of the concentrator panel forms a hollow housing, a Fresnel lens that concentrates sunlight is provided to a light-incident side of each housing, the sunlight that has been concentrated through the Fresnel lens is reflected by a visible light reflection filter that is provided to a middle part of each housing, the visible light reflection filter being tilted by 45° with respect to the Fresnel lens, and reflecting only visible light, the sunlight that has been reflected by the visible light reflection filter enters a concentrator cell through a correction prism lens, and is converted into electricity, the electricity is stored in an electrical storage device through a control board via a lead, and infrared light that has passed through the visible light reflection filter is reflected and concentrated by an infrared light reflection mirror that is provided to a lower part of the visible light reflection filter, and is tilted by 45° with respect to the Fresnel lens, concentrated on an optical fiber inlet through a correction condenser lens, and stored in the form of heat in a boiler that utilizes concentrated light that includes a thermoelectric converter through an optical fiber.

5. The self-contained energy supply facility according to claim 1 or 2, comprising a boiler that utilizes solar energy, wherein each of a plurality of concentrator grids included in a concentrator panel used for the self-contained energy supply facility forms a hollow housing, a Fresnel lens that concentrates sunlight is provided to a light-incident side of each housing, sunlight that has been concentrated through the Fresnel lens is reflected by a visible light reflection filter that is provided to a middle part of each housing, the visible light reflection filter being tilted by 45° with respect to the Fresnel lens, and reflecting only visible light, visible light that has been reflected by the visible light reflection filter enters a concentrator cell through a correction prism lens, and is converted into electricity, the electricity is stored in an electrical storage device through a control board via a lead, infrared light that has passed through the visible light reflection filter is reflected and concentrated by an infrared light reflection mirror that is provided to a lower part of the visible light reflection filter, and is tilted by 45° with respect to the Fresnel lens, concentrated on an optical fiber inlet through a correction condenser lens, and applied to a heat-exchange pipe through an inlet of a boiler that utilizes concentrated light to heat water that is circulated through the heat-exchange pipe to produce high-temperature steam, and the high-temperature steam is stored in a boiler tank that is covered with an insulating material.

6. The self-contained energy supply facility according to any one of claims 1 to 5, wherein a plurality of the concentrator panel units are installed on the roof within the energy supply facility, each of the plurality of concentrator panel units includes an angle adjustment mechanism and a rotation mechanism so that sunlight can be efficiently concentrated by driving the angle adjustment mechanism and the rotation mechanism using the solar tracker, and each of the plurality of concentrator panel units is configured to be foldable within a concentrator panel support frame so that each of the plurality of concentrator panel units can be folded, or can be folded and stored indoors, during nighttime, after sunset, or when weather conditions are bad.

7. The self-contained energy supply facility according to any one of claims 1 to 5, wherein infrared light that has passed through a visible light reflection filter within the concentrator grid of the concentrator panel unit is reflected and concentrated by an infrared light reflection mirror that is provided to a lower part of the visible light reflection filter, and is tilted by 45° with respect to the Fresnel lens, concentrated on an optical fiber inlet through a correction condenser lens, and applied to a heat-exchange pipe of a boiler that utilizes concentrated light, water that is circulated through the heat-exchange pipe is heated to produce steam, the steam is heated using a steam heater to produce medium-temperature steam, the medium-temperature steam is continuously supplied to an electrolytic cell in which a porous cathode is provided on one side of an electrolyte, and a porous anode is provided on the other side of the electrolyte, while applying a voltage between the porous cathode and the porous anode to effect electrolysis to produce hydrogen and oxygen, and the hydrogen is stored in a hydrogen tank, and can be supplied to a hydrogen-fueled vehicle from the hydrogen fuel supply unit via a secondary pressurization device.

8. The self-contained energy supply facility according to any one of claims 1 to 5, wherein hydrogen and oxygen that have been produced by the medium-temperature steam electrolyzer and stored in a hydrogen tank and an oxygen tank are supplied to a fuel cell provided within the energy supply facility to generate electricity, and the electricity is stored in the electrical storage device to increase the amount of electricity stored in the electrical storage device.
